# EUROPÄISCHE PATENTSCHRIFT

(11) **EP 2 021 414 B1**
(45) Veröffentlichungstag und Bekanntmachung des Hinweises auf die Patenterteilung: **06.10.2010**
(21) Anmeldenummer: 07725058.7
(22) Anmeldetag: 10.05.2007
(51) Int. Cl.: C08L 97/02, B32B 27/18

(54) **FORMKÖRPER**
MOLDED ARTICLE
CORPS MOULÉ

(30) Priorität: 16.05.2006 DE 202006007792 U
(43) Veröffentlichungstag der Anmeldung: 11.02.2009
(73) Patentinhaber: REHAU AG + Co, 95111 Rehau (DE)
(72) Erfinder: OELSCHLEGEL, Alexander, 95176 Konradsreuth (DE); KLEMENT, Klaus, 95111 Rehau (DE); WILFERT, Michaela, 95030 Hof (DE); GRIEBEL, Dragan, 95111 Rehau (DE); SCHMIDT, Steven, 95182 Döhlau (DE)
(86) Internationale Anmeldenummer: PCT/EP2007/004136
(87) Internationale Veröffentlichungsnummer: WO 2007/131695

(56) Entgegenhaltungen:
- EP-A- 1 250 995
- WO-A1-2004/092279
- DE-A1-102004 054 379
- DE-U1-202004 017 432

## Beschreibung

Die Erfindung betrifft einen Formkörper mit einer holzähnlichen Oberfläche.

Derartige Formkörper sind durch offenkundige Vorbenutzung seit längerer Zeit bekannt.

So nennt die japanische Schrift JP 9-228739 beispielsweise einen Kunststoff-Fensterrahmen mit Holzmusterung, der eine Oberflächenschicht aufweist, in die feines Zellulosepulver, also Holzteilchen, gemischt ist.

Formmassen mit einem Polymer- und einem Holzbestandteil, die unter anderem zur Herstellung von Profilkörpern eingesetzt werden, sind darüber hinaus beschrieben in der US 5951927 A, der WO 95/13179 A1, der EP 1396332 A1, der EP 1140448 B1, der WO 98/19838 A2, der WO 97/36720 A1, der WO 90/14935 A1 und der WO 95/04111 A1.

Nachteilig an den bekannten Formkörpern mit holzähnlicher Oberfläche ist, dass die Oberfläche, welche die Holzteilchen enthält, in Optik und Haptik zu einer Echtholzschicht nur sehr bedingt vergleichbar ist und wenig Ähnlichkeit zeigt.
Insbesondere Glätte und Glanz der Oberfläche vermitteln dem Betrachter ein kunststoffartiges Aussehen, die Oberfläche fühlt sich kalt an, was nicht dem vom Holz her bekanntem Empfinden entspricht.
Solche Oberflächen, die zwar das Aussehen von Holz nachahmen, sind in Optik und Haptik weit von einer Echtholzlösung entfernt.

Die EP 1 250 995 A offenbart Formkörper, welche aus einem Kern aus Kornpositmaterial enthaltend Cellulosefasern und ein thermoplastisches Polymer als Matrix enthalten. Aus der DE 20 2004 017 432 U1 sowie der DE 10 2004 054 379 A1 ist ein Profilkörper aus einem Copolymer und Holzteilchen bekannt, wobei ein Haftvermittler eine Bindung zwischen diesen beiden Komponenten bewirkt. Die WO 2004/092279 offenbart ein Compositmaterial, das Naturfasern enthält.

Der vorliegenden Erfindung liegt die Aufgabe zu Grunde, einen Formkörper anzugeben, der eine zu Echtholz sehr ähnliche Oberfläche, die Holzteilchen enthält, aufweist. Darüber hinaus soll die aus Formkörpern zusammengesetzte Rahmenanordnung genannt werden.

Die vorliegende Aufgabe wird durch einen Formkörper mit einer holzähnlichen Oberfläche gemäß Anspruch 1 gelöst.

Weitere Merkmale der Erfindung finden sich in den Unteransprüchen.

Der Formkörper mit einer holzähnlichen Oberfläche besteht aus
- (1) einem thermoplastischen Polymer und
- (2) cellulosischen und/oder lignocellulosischen Fasern und
- (3) einem Haftvermittler und
- (4) Farbmittel und
- (5) optional Additiven und
- (6) optional einem Füllstoff,
   wobei diese Polymermischung zu dem Formkörper, insbesondere durch Extrusionsverarbeitung, geformt ist, und mindestens ein Abschnitt mindestens einer Oberfläche des Formkörpers unter teilweisem Abtrag von Material der Oberfläche gebürstet ist,
   wobei die gebürstete Oberfläche des Formkörpers mittels
- (A) einer thermisch härtenden Oberflächenbeschichtung und/oder
- (B) einer strahlenhärtenden Oberflächenbeschichtung und/oder
- (C) einer Kombination aus einer thermisch härtenden und einer strahlenhärtenden Oberflächenbeschichtung
   versiegelt ist.

Das Verfahren zur Herstellung eines Formkörpers mit einer holzähnlichen Oberfläche weist folgende Verfahrensschritte auf:
Bereitstellen einer Polymermischung, die
   - (1) ein thermoplastisches Polymer und
   - (2) cellulosische und/oder lignocellulosische Fasern und
   - (3) einem Haftvermittler und
   - (4) Farbmittel
   enthält,
Formen der Polymermischung zu einem Formkörper, insbesondere durch Extrusionsverarbeitung mit nachfolgendem Abkühlen und Kalibrieren,
Bürsten mindestens eines Abschnittes mindestens einer Oberfläche des Formkörpers unter teilweisem Abtrag von Material der Oberfläche,

Versiegelung der gebürsteten Oberfläche des Formkörpers mittels
- (A) einer thermisch härtenden Oberflächenbeschichtung und/oder
- (B) einer strahlenhärtenden Oberflächenbeschichtung und/oder
- (C) einer Kombination aus einer thermisch härtenden und einer strahlenhärtenden Oberflächenbeschichtung.

Nach diesem Verfahren sind in einfacher Weise Formkörper zugänglich, die die genannten Nachteile des Standes der Technik überwinden.

Im folgenden wird die Erfindung näher erläutert:

Das thermoplastische Polymer ist bevorzugt ein Polypropylen (PP) -Homo- oder Copolymer.

Dieses wird in der Zusammensetzung zu 20 bis 85 Teilen eingesetzt, dazu werden Fasern in einer Menge von 15 bis 80 Teilen gegeben.

Bevorzugt wird eine Mischung eingesetzt, die 60 Teile Polymer und 40 Teile Fasern enthält.

Die Fasern sind cellulosische oder lignocellulosische Fasern.

Diese können optional vorbehandelt sein, um die Wasseraufnahme zu verringern.
Die Vorbehandlung kann beispielsweise eine Oberflächenbehandlung der Fasern mit einem Silan sein, dadurch wird die Oberfläche hydrophob gemacht.

Als erfindungswesentlich hat sich ergeben, dass feine Holzfasern eingesetzt werden, wobei mehr als 80 % der Fasern mit bloßem Auge aus 1 m Entfernung nicht mehr zu erkennen sind.

Die Dicke der Fasern beträgt maximal d = 750 µm.

Vorteilhaft wird ein Längen- zu Dickenverhältnis der Fasern von > 2 : 1 gewählt.

Als besonders günstig hat sich herausgestellt, wenn die Einfärbung des Grundpolymers angepasst ist an die Farbe der Faser, wobei ein geringer Kontrast herrschen soll. Hierzu kann der Kontrast eine Farbabweichung in L und/oder a und/oder b im Lab-Farbsystem sein.

Weiterhin weist die Formmasse einen Haftvermittler bzw. ein Haftvermittlersystem auf, welches für eine Haftung zwischen dem Blockcopolymer und den Holzteilchen sorgt.
Beim Haftvermittlersystem handelt es sich um mit Maleinsäureanhydrid-gepfropftes Ethylen-Propylen-Blockcopolymer.
Auch ein anderes mit Maleinsäureanhydrid gepfropftes Polymer ist möglich.
Der Haftvermittler liegt mit einem Gewichtsanteil von 3 % vor.
Auch andere Gewichtsanteile zwischen 0,5 und 5 % sind möglich.
Der Haftvermittler hat einen Pfropfungsgrad von 5 %. Auch andere Pfropfungsgrade zwischen 0,2 und 10 % sind möglich..

Es hat sich als vorteilhaft erwiesen, wenn als Farbmittel zur Einfärbung der Formmasse Pigmente zu Einsatz kommen, die ausgewählt sind aus anorganischen Pigmenten wie Titandioxid, Zinkoxid, Eisenoxidschwarz, Spinellschwarz, Rotpigmenten, Gelbpigmenten, Grünpigmenten, Blaupigmenten, Braunpigmenten und/oder aus organischen Pigmenten wie Ruß, Schwarzpigmenten, Gelbpigmenten, Rotpigmenten, Grünpigmenten, Blaupigmenten, Violettpigmenten, Braunpigmenten.
Alternativ lassen sich Farbstoffe, wie gelbe, rote, grüne, blaue, violette, oder braune Farbstoffe vorteilhaft zur Einfärbung einsetzen.
Es ist auch möglich, die Einfärbung mit anderen Farbmitteln mit Trägerrohstoffen, wie flüssigen oder pastösen Trägerrohstoffen oder mit Farbmasterbatches vorzunehmen.

Die in der Formmasse für die Herstellung von Profilkörpern gemäß der vorliegenden Erfindung optional enthaltenen Additive können Schaumbildner, Stabilisatoren, Gleitmittel, Bio- und Fungizide und Flammschutzmittel sein.

Um ein zu Holz vergleichbares Aussehen des Profilkörpers zu erzeugen, ist dieser aus einer abschnittsweise Farbmittel aufweisenden Formmasse hergestellt, dabei weist die abschnittsweise Farbmittel aufweisende Formmasse eine dem jeweiligen Abschnitt zugeordnete Farbe auf.

Ein zu Holz vergleichbares Aussehen des Profilkörpers ist insbesondere leicht erreichbar, wenn Abschnitte der abschnittsweise Farbmittel aufweisenden Formmasse unterschiedliche Farbtöne aufweisen.

Die sich farblich unterscheidenden Abschnitte können als Streifen oder Bänder oder Flächen oder Flecken oder Punkte oder Maserierungen ausgebildet sein.
Es ist dabei besonders vorteilhaft, wenn die jeweils nebeneinander angeordneten Abschnitte alternierend in beispielsweise zwei Farben, die sich voneinander deutlich unterscheiden, eingefärbt sind.

Es können aber auch drei oder mehr unterschiedliche Farben vorgesehen sein, um so eine noch besser an ein Holzaussehen angepasste Optik des erfindungsgemäßen Profilkörpers zu erreichen.

Eine derartige Mehrfarbigkeit, wobei abschnittsweise keine homogene Verteilung der Farbpigmente vorliegt, so dass eine Maserierung / lebhaft farbige Holzoptik / verbesserter Holzoptik-Eindruck im Formkörper dargestellt ist, bewirkt ein besonders vorteilhaftes Aussehen.

Zur weiteren Einstellung ausgewählter Materialparameter dient ein Füllstoff.
Als Füllstoffe kommen insbesondere in Betracht Naturfasern wie Hanf, Flachs, Sisal, Jute oder Zellulose; Kunstfasern wie Kohlenstofffasern, Polymerfasern z. B. auf Basis Polyamid, Polyester, Polyacrylnitril oder Regeneratzellulose sowie mineralische Füllstoffe wie Talkum, Wollastonit, Glasfasern oder Kreide.

Füllstoffe, ausgewählt aus synthetischem gefälltem Calciumcarbonat und/oder Kalkstein und/oder Marmor und/oder Dolomit und/oder Schwerspat und/oder Aluminiumhydroxid und/oder gefällter oder pyrogener Kieselsäure können in der Zusammensetzung ebenfalls enthalten sein.

Die in der Zusammensetzung vorhandenen Holzteilchen bestehen bevorzugt aus Nadelholz.

Hierzu eignet sich insbesondere Fichte, Tiefer, Tanne, Lärche, Eibe, Zeder, Redwood, Pinie, Zypresse, Douglasie und Sequoia oder eine Mischung der vorgenannten Hölzer.

Die Holzteilchen liegen dabei bevorzugt in einer faserigen Struktur vor. Sie können aber auch Holzmehl sein.
Für die Ausbildung einer zur Echtholz vergleichbaren Optik der Oberfläche sind die Holzteilchen farbig, wobei eine gelbe Farbe besonders bevorzugt ist.

Es ist besonders vorteilhaft, wenn die Holzteilchen eine Größenverteilung aufweisen, bei der der Hauptteil eine Länge von 250 bis 500 µm besitzt.

Durch die Auswahl von Holzfasern hinsichtlich deren Länge und Farbe kann ein zusätzlicher optischer Effekt erreicht werden, der sich darin äußert, dass bei einer bestimmten Zugabemenge und bei einem genügend großen Farb- und/oder Helligkeitskontrast zur Farbe der Zusammensetzung eine intensive Holzmaserung bei einem derartig ausgestatteten Profil resultiert.
Es gelingt damit erfindungsgemäß, eine Holzoptik mit besonders hohen Ansprüchen hinsichtlich der Qualität nachzustellen.

Es ist vorteilhaft, wenn zur Einfärbung der Zusammensetzung zusätzlich Pigmentmasterbatches, die aus Polymermaterial und geeigneten Pigmenten hergestellt sind, verwendet werden.
Diese werden bevorzugt in Granulatform eingesetzt und zur Zusammensetzung mit in den Extruder dosiert.
Hierbei entstehen bei der Mischung der Materialien im Extruder unvollständig gemischte Phasen, die sich an der Oberfläche des Formkörpers als Maserierungseffekt zeigen. Dadurch wird der Eindruck von Echtholz weiter gesteigert.
Es werden bevorzugt zwei verschiedenfarbige Masterbatches zur Einfärbung einer Zusammensetzung verwendet, es können aber auch drei oder mehr eingesetzt werden.

Es hat sich als besonders vorteilhaft herausgestellt, dass die Zusammensetzung durch eine sogenannte Direktdosierung in den Extruder eingebracht werden kann.

Dazu werden die einzelnen Komponenten der Zusammensetzung nach gravimetrischer Verwägung in den Trichter des Extruders kontinuierlich dosiert.
Im Extruder erfolgt mit Hilfe einer optimierten Faserschnecke eine Einarbeitung der Holzteilchen in die Polymermatrix und eine Homogenisierung der Zusammensetzung.
Hierbei wird die Zusammensetzung entgast, dies kann einmal oder auch mehrmals erfolgen, auch kann dies mit Hilfe einer Vakuumunterstützung in hoher Effektivität ausgeführt werden.

Die Schnecke führt die Zusammensetzung einem Werkzeug zu, in dem der Formkörper geformt wird.

Das Werkzeug kann als Zuspritzwerkzeug oder als Coextrusionswerkzeug gestaltet sein.

Wenn das Werkzeug ein Zuspritzwerkzeug ist, kann durch eine gesteuerte Zugabe abweichend eingefärbter Formmassen an verschiedenen Stellen im Schmelzestromquerschnitt vorgesehen sein, dass an der Oberfläche des Formkörpers farblich unterschiedliche Streifen ausgebildet werden, die eine verbesserte Holzoptik darstellen. Zur Erzeugung der Streifigkeit erfolgt die Zugabe bevorzugt kurz vor dem Werkzeug, welches den Formkörper aus dem Polymermaterial formt.
Auch kann alternativ vorgesehen sein, dass die Schmelze derartig gemischt wird, dass die Farbmittel eine ungleichmäßige Verteilung im Schmelzevolumen aufweisen, und in diesem Zustand geformt wird, so dass auf der Oberfläche des Formkörpers diese Verteilung sichtbar wird.

Eine sehr holzähnliche Optik kann z.B. dadurch erreicht werden, dass die Polymerschmelze nach der Zugabe der abweichend eingefärbten Formmassen noch einen Statikmischer passiert.

Mit diesen Techniken gelingt es, eine Maserierung / Farbgebung / Optik der Oberfläche des Formkörpers zu erzielen, die eine hohe Ähnlichkeit mit Holz aufweist.

Im Sinne der Erfindung kann dabei auch vorgesehen sein, eine On-line-Farbmessung bei der Produktion der Formkörper vorzunehmen, wobei mittels einer Fuzzy-Logik auf die Pigmentzugabe und auf die Art der Pigmentverteilung Einfluss genommen wird.

Dazu können beispielsweise Bilddatenbanken herangezogen werden, die zum Vergleich mit dem Produktionsergebnis dienen.
Aus der Bildverarbeitung, die insbesondere einen Bildvergleich und eine Bilddifferenzbildung umfasst, erfolgt eine rechnergestützte Rückkopplung zur Farbpigmentzugabe zum Material am Trichter des Extruders.
Dadurch kann eine hohe Konstanz in die Produktion der Formkörper gemäß der vorliegenden Erfindung gebracht werden.

Nachdem der Formkörper geformt ist, wird dieser nachfolgend abgekühlt und kalibriert.

An die Abkühlung / Kalibrierung schließt sich ein Bürstarbeitsgang an.

Beim Bürsten der Oberfläche des Formkörpers erfolgt ein Abtragen von Material der Oberfläche, hierbei werden bevorzugt tiefe Riefen gebildet.

Diese verleihen dem derart behandelten Formkörper ein holzähnliches Aussehen.

Das Bürsten der Oberfläche geschieht mit Hilfe einer Bürstmaschine, die mehrere Bürststationen umfassen kann.

Durch Veränderung der Bürstenparameter, insbesondere des Anpressdruckes und der Drehzahl, lassen sich veränderliche Bürstbilder und damit eine "lebhafte", d. h. abwechslungsreiche, dem Aussehen von Echtholz angenäherte Oberfläche des Formkörpers erzeugen.

Die Bürstenauswahl kann auch derart erfolgen, dass sehr unterschiedliche Bürsten eingesetzt werden, die deutlich verschiedene Bürstbilder erzeugen, wobei die Bürsten gesteuert abschnittsweise in variierender Intensität eingesetzt werden.
Hierdurch gelingt es ganz besonders vorteilhaft, ein holzähnliches Aussehen zu generieren.

Es kann auch vorgesehen sein, dass der Bürstungseffekt durch verschiedene Bürsten, die unterschiedliche Bürstungen erzeugen, auf der Oberfläche des Formkörpers erzeugt wird, wobei der Effekt durch das zeitlich gesteuerte Einwirken einer oder mehrerer Bürsten hervorgerufen wird.

Hierdurch ist es möglich, einen besonders lebhaften und damit holzähnlichen Eindruck der Oberfläche des Formkörpers zu schaffen.

Das Bürsten kann mittels eines digitalen neuro-fuzzy-kontrollierten Bildverarbeitungssystems überwacht und gesteuert werden
Hierzu kann eine Kamera das Bild der gebürsteten Profiloberfläche aufnehmen, der Vergleich des Bildes mit einem im System gespeicherten Bild kann eine rechnergestützte Entscheidung herbeiführen, ob ein anderes Bürstungsbild zu erzeugen ist. Das System kann zur Herleitung neuer Bürstungsparameter eingesetzt werden, diese werden an die Bürststation übertragen. Anschließend kann ein Vergleich des Bildes mit dem im System hinterlegten Bild und mit dem auf den Parametern vor der Änderung basierenden Bild erfolgen.

Es kann ein hybrides Oberflächenbeschichtungssystem basierend auf holztypischen Oberflächenbeschichtungen, z.B. handelsübliche Holzlasuren auf Acrylharzbasis, Alkydharzbasis oder Leinölbasis, handelsübliche Holzlacke oder Holzwachse und typischen Kunststofflacksystemen eingesetzt werden.

Es wird eine aushärtende Oberflächenbeschichtung eingesetzt.

Die Aushärtung kann bei Raumtemperatur, bei einer von der Raumtemperatur abweichenden Temperatur, die insbesondere höher als die Raumtemperatur ist (man spricht dann von einem thermisch härtenden System) oder unter dem Einfluss von Strahlung (mittels Ultarviolettstrahlung (UV) oder durch Elektronenstrahlen) erfolgen.

Die Aushärtung der Oberflächenbeschichtung kann durch Kombination der vorstehend genannten Techniken vorgenommen werden.

Die Oberflächenbeschichtung kann ein- oder mehrschichtig ausgeführt werden. Der einschichtige Aufbau wird bevorzugt für transparente Beschichtungen eingesetzt, der mehrschichtige Aufbau bevorzugt für deckend eingefärbte Beschichtungen.

Eine Beschichtung trägt insbesondere zum Schutz des Formkörpers bei.

Aus den Formkörpern, die nach dem vorstehend geschilderten Verfahren hergestellt wurden, lassen sich Rahmenanordnung zusammensetzen, wobei die Formkörper an Enden miteinander verbunden sind.

Besonders vorteilhaft sind Rahmenanordnung, bei denen die holzähnliche Oberfläche der zusammengesetzten Formkörper jeweils in die gleiche Richtung weist.

Verwendung finden die erfindungsgemäßen Formkörper als Fenster- und Türbauprofile, als Wintergartenbauprofile, für die Herstellung von Klappläden, als Möbelbauteile, als Gartenmöbelbauteile, als Kantenelemente, als Bodenbelag, als Wandverkleidung, als Deckenverkleidung, als Abdeckprofile, als Bauprofile, etc..

## Patentansprüche

1. Formkörper mit einer holzähnlichen Oberfläche, bestehend aus
- (1) einem thermoplastischen Polymer und
- (2) cellulosischen und/oder lignocellulosischen Fasern und
- (3) einem Haftvermittler und
- (4) Farbmittel und
- (5) optional Additiven und
- (6) optional einem Füllstoff,
wobei diese Polymermischung zu dem Formkörper geformt ist,
und mindestens ein Abschnitt mindestens einer Oberfläche des Formkörpers unter teilweisem Abtrag von Material der Oberfläche gebürstet ist,
wobei die gebürstete Oberfläche des Formkörpers mittels
- (A) einer thermisch härtenden Oberflächenbeschichtung und/oder
- (B) einer strahlenhärtenden Oberflächenbeschichtung und/oder
- (C) einer Kombination aus einer thermisch härtenden und einer strahlenhärtenden Oberflächenbeschichtung
versiegelt ist.

2. Formkörper nach Anspruch 1, wobei der Anteil des thermoplastischen Polymers in der Polymermischung 20 bis 85 Teile beträgt.

3. Formkörper nach einem der vorangehenden Ansprüche, wobei der Anteil der Fasern in der Polymermischung 15 bis 80 Teile beträgt.

4. Formkörper nach einem der vorangehenden Ansprüche, wobei die Holzfasern derart ausgewählt sind, dass mehr als 80 % der Fasern mit bloßem Auge aus 1 m Entfernung nicht mehr zu erkennen sind.

5. Formkörper nach einem der vorangehenden Ansprüche, wobei der Hauptteil der Fasern eine Länge von 250 bis 500 µm aufweist.

6. Formkörper nach einem der vorangehenden Ansprüche, wobei die Fasern vorbehandelt sind, um die Wasseraufnahme zu verringern.

7. Formkörper nach Anspruch 6, wobei die Vorbehandlung in einer Oberflächenbehandlung der Fasern mit einem Silan besteht, wodurch die Oberfläche der Fasern hydrophobiert ist.

8. Formkörper nach einem der vorangehenden Ansprüche, wobei von der Oberfläche des Formkörpers Material durch Bürsten abgetragen ist unter Ausbildung von Riefen.

9. Rahmenanordnung aus Formkörpern gemäß einem der vorhergehenden Ansprüche, der aus Formkörpern zusammengesetzt ist, die an Enden miteinander verbunden sind.

10. Rahmenanordnung aus Formkörpern gemäß Anspruch 9, **dadurch gekennzeichnet, dass** die holzähnliche Oberfläche der zusammengesetzten Formkörper jeweils in die gleiche Richtung weist.

## Claims

1. Shaped article having a woodlike surface, composed of
- (1) a thermoplastic polymer and
- (2) cellulosic and/or lignocellulosic fibres and
- (3) an adhesion promoter and
- (4) colorants and
- (5) optionally additives and
- (6) optionally a filler,
this polymer mixture being shaped to form the shaped article, and at least one section of at least one surface of the shaped article being brushed with partial removal of material of the surface, the brushed surface of the shaped article being sealed by means of
- (A) a thermally curing surface coating and/or
- (B) a radiation-curing surface coating and/or
- (C) a combination of a thermally curing and a radiation-curing surface coating.

2. Shaped article according to Claim 1, the fraction of the thermoplastic polymer in the polymer mixture being 20 to 85 parts.

3. Shaped article according to either of the preceding claims, the fraction of the fibres in the polymer mixture being 15 to 80 parts.

4. Shaped article according to any of the preceding claims, the wood fibres being selected such that more than 80% of the fibres are no longer discernible to the naked eye from a distance of 1 m.

5. Shaped article according to any of the preceding claims, the majority of the fibres having a length of 250 to 500 µm.

6. Shaped article according to any of the preceding claims, the fibres being pretreated in order to reduce water absorption.

7. Shaped article according to Claim 6, the pretreatment consisting of a surface treatment of the fibres with a silane to render the surface of the fibres hydrophobic.

8. Shaped article according to any of the preceding claims, material being removed from the surface of the shaped article by brushing with formation of grooves.

9. Frame arrangement comprising shaped articles according to any of the preceding claims, assembled from shaped articles joined to one another at the ends.

10. Frame arrangement comprising shaped articles according to Claim 9, **characterized in that** the woodlike surface of the assembled shaped articles faces in the same direction in each case.

## Revendications

1. Corps moulé ayant une surface ressemblant au bois, constitué
- (1) d'un polymère thermoplastique et
- (2) de fibres cellulosiques et/ou lignocellulosiques
- (3) d'un promoteur d'adhérence et
- (4) d'un agent colorant et
- (5) en option d'additifs et
- (6) en option d'une charge,
ce mélange à base de polymère étant moulé en un corps moulé, et au moins une partie d'au moins une surface du corps moulé étant brossée avec enlèvement partiel de matière de la surface, la surface brossée du corps moulé étant scellée par
- (A) un revêtement superficiel durcissable thermiquement et/ou
- (B) un revêtement superficiel durcissable par irradiation et/ou
- (C) une combinaison d'un revêtement durcissable thermiquement et d'un revêtement durcissable par irradiation.

2. Corps moulé selon la revendication 1, dans lequel la proportion du polymère thermoplastique dans le mélange à base de polymère est de 20 à 85 parties.

3. Corps moulé selon l'une quelconque des revendications précédentes, dans lequel la proportion des fibres dans le mélange à base de polymère est de 15 à 80 parties.

4. Corps moulé selon l'une quelconque des revendications précédentes, dans lequel les fibres de bois sont choisies de manière à ce que plus de 80 % des fibres ne soient plus visibles à l'oeil nu d'une distance de 1 m.

5. Corps moulé selon l'une quelconque des revendications précédentes, dans lequel la majeure partie des fibres ont une longueur de 250 à 500 µm.

6. Corps moulé selon l'une quelconque des revendications précédentes, dans lequel les fibres sont prétraitées afin de diminuer l'absorption d'eau.

7. Corps moulé selon la revendication 6, dans lequel le prétraitement consiste en un traitement de surface des fibres par un silane, de sorte que la surface des fibres soit rendue hydrophobe.

8. Corps moulé selon l'une quelconque des revendications précédentes, dans lequel de la matière est enlevée par brossage de la surface du corps moulé, avec formation de cannelures.

9. Assemblage de châssis à base de corps moulés selon l'une quelconque des revendications précédentes, qui est composé de corps moulés qui sont assemblés aux extrémités.

10. Assemblage de châssis à base de corps moulés selon la revendication 9, **caractérisé en ce que** la surface ressemblant au bois des corps moulés assemblés est chaque fois orientée dans le même sens.
